# EUROPEAN PATENT APPLICATION

(11) **EP 4 826 686 A1**
(43) Date of publication of application: **21.10.2026**
(21) Application number: 25170331.0
(22) Date of filing: 14.04.2025
(51) Int. Cl.: G07C 9/00

(54) **A METHOD FOR CONTROLLING A WEARABLE ELECTRONIC DEVICE THAT IS ADAPTED FOR CONTROLLING A FUNCTION OF A VEHICLE AND A SYSTEM**

(71) Applicant: ZHEJIANG ZEEKR INTELLIGENT TECHNOLOGY CO., LTD., Zhejiang 315336 (CN); Zhejiang Geely Holding Group Co., Ltd., Hangzhou, Zhejiang 310051 (CN)
(72) Inventor: SETTERBERG, Johan, 416 79 GÖTEBORG (SE); WAERN, Jonathan, 443 39 LERUM (SE)
(74) Representative: Zacco Sweden AB

(57) **Abstract**

The disclosure relates to a method for controlling a wearable electronic device (2) that is adapted for controlling a function of a vehicle (1), wherein the wearable electronic device (2) comprises a motion sensor (25) for detecting a movement pattern which is predetermined for controlling the vehicle function, wherein the motion sensor is adapted to be in an active mode or in a sleep mode, the method comprising: determining (S1) a position of the vehicle when the vehicle is stationary; storing (S2) the determined position of the vehicle (1) as a last known position of the vehicle; in response to determining that a user carrying the wearable electronic device is moving away from the vehicle: determining (S3) a current position of the user by means of the wearable electronic device (2) or by means of an external electronic device (3) that is operatively connected to the wearable electronic device (2) and carried by the user, and determining a distance (d) between the determined current position of the user and the last known position of the vehicle; in response to determining (S4) that that the distance (d) is above a first predetermined distance (d1): entering the sleep mode (S5) of the motion sensor (25) of the wearable electronic device (2) if the motion sensor (25) of the wearable electronic device (2) is in the active mode; and/or in response to determining that a user carrying the wearable electronic device is approaching the vehicle, determining a current position of the user by means of the wearable electronic device (2) or by means of the external electronic device (3) that is operatively connected to the wearable electronic device (2) and carried by the user, and determining a distance (d) between the determined current position of the user and the last known position of the vehicle, and if the motion sensor of the wearable electronic device is in a sleep mode and the distance (d) is below a second predetermined distance (d2): entering the active mode of the motion sensor (S7) of the wearable electronic device (2) if the motion sensor (25) of the wearable electronic device (2) is in the sleep mode. The disclosure further relates to a system.

## Description

### Technical field

The present disclosure relates to a method for controlling a wearable electronic device that is adapted for controlling a function of a vehicle and a system. More specifically, the disclosure relates to a method for controlling a wearable electronic device that is adapted for controlling a function of a vehicle and a system as defined in the introductory parts of the independent claims.

### Background art

The control of vehicles using key-enabled electronic devices has evolved significantly over the past few decades. Traditional mechanical keys have been largely replaced by electronic key fobs and smart keys, which offer enhanced security and convenience. These electronic devices typically use radio frequency (RF) signals to communicate with the vehicle, allowing for remote locking, unlocking, and starting of the engine.

Modern key-enabled electronic devices often incorporate features such as passive entry, where the vehicle automatically unlocks when the key fob is in close proximity, and push-button start systems, which eliminate the need for a physical key to start the engine. Additionally, some systems now integrate with smartphones, enabling users to control various vehicle functions through mobile applications.

Despite these advancements, there are still limitations and challenges associated with current methods for controlling vehicles using key-enabled electronic devices. For instance, the reliance on battery-powered devices can lead to issues if the battery is depleted, rendering the key fob inoperative.

The present invention aims to address these challenges by providing an improved method for controlling a vehicle with a key-enabled electronic device. This method enhances reliability, offering a more robust solution for modern vehicle control systems.

### Summary

It is an object of the present disclosure to mitigate, alleviate or eliminate one or more of the above-identified deficiencies and disadvantages in the prior art and solve at least the above mentioned problem. According to a first aspect there is provided a method for controlling a wearable electronic device that is adapted for controlling a function of a vehicle, wherein the wearable electronic device comprises a motion sensor for detecting a movement pattern which is predetermined for controlling the vehicle function, wherein the motion sensor is adapted to be in an active mode or in a sleep mode, the method comprising: determining a position of the vehicle when the vehicle is stationary; storing the determined position of the vehicle as a last known position of the vehicle; in response to determining that a user carrying the wearable electronic device is moving away from the vehicle: determining a current position of the user by means of the wearable electronic device or by means of an external electronic device that is operatively connected to the wearable electronic device and carried by the user, and determining a distance between the determined current position of the user and the last known position of the vehicle; in response to determining that that the distance is above a first predetermined distance : entering the sleep mode of the motion sensor of the wearable electronic device if the motion sensor of the wearable electronic device is in the active mode; and/or in response to determining that a user carrying the wearable electronic device is approaching the vehicle, determining a current position of the user by means of the wearable electronic device or by means of the external electronic device that is operatively connected to the wearable electronic device and carried by the user, and determining a distance between the determined current position of the user and the last known position of the vehicle, and if the motion sensor of the wearable electronic device is in a sleep mode and the distance is below a second predetermined distance : entering the active mode of the motion sensor of the wearable electronic device if the motion sensor of the wearable electronic device is in the sleep mode.

One significant advantage of the aforementioned subject matter is the conservation of energy when the vehicle functions of the wearable device enter sleep mode while at a distance from the vehicle. This feature allows for the utilization of more energy-intensive vehicle functions when the device is in close proximity to the vehicle, which would otherwise be impractical. Motino sensing functions are very energy intensive for a small electronic device as a wearable electronic device often is, the feature to enter sleep mode for these vehicle functions when they are not needed will thus save energy and be valuable by prolonging battery life time.

According to some embodiments, the method comprises the step of determining the current position of the user by means of a third positioning unit integrated in the external electronic device.

By using an external electronic device to keep track of the position of the user of both the external electronic device and the wearable device, the wearable device can be simplified and does not have to have it's own positioning means, or the wearable device can go into sleep mode with all it's functions, including a positioning unit if available, thus preserving energy and increasing battery lifetime.

According to some embodiments, entering the active mode of the motion sensor is initiated by a first wake-up signal sent from the external electronic device to the wearable electronic device in response to the determination that the distance is below the second predetermined distance when the user carrying the wearable electronic device is approaching the vehicle. The wearable device can thereby be kept in a deeper sleeping mode in which further or most functions of the wearable device are sleeping, thereby saving even more energy and battery power.

According to some embodiments, the method comprises the step of determining the current position of the user by means of a second positioning unit integrated in the wearable electronic device.

A notable advantage of the described system is its inherent flexibility in utilizing the positioning unit. Depending on the specifications and capabilities of the respective devices, the positioning unit can be employed either in the wearable device or in the external electronic device. This adaptability ensures that the system can always leverage the most suitable positioning unit available, thereby optimizing functionality and performance. By accommodating the varying specifications of different devices, the system enhances its overall efficiency and reliability.

According to some embodiments, the method comprises the step of determining a position of one of the wearable electronic device and the external electronic device by means of an electronic device positioning system in the vehicle when the user carrying the wearable electronic device is approaching the vehicle within a distance below the second predetermined distance from the vehicle.

An advantage of performing the positioning at the vehicle is that the accuracy of the key device positioning system of the vehicle is much better than satellite positioning. The key device positioning system can e.g. use triangulation signal strength and cameras to determine the position of the wearable device relative the vehicle within a few centimetres.

According to some embodiments, the method comprises in response to the determination that the distance is below the second predetermined distance: sending a second wake-up signal to the vehicle from either the wearable device or the external electronic device when the user carrying the wearable electronic device is approaching the vehicle.

One significant advantage of this feature is that it allows the vehicle to enter sleep mode when the user is away from the vehicle. This functionality is beneficial regardless of the duration of the user's absence, whether it is for a short period or an extended time. By enabling the vehicle to enter sleep mode when not in use, the system effectively conserves battery power. This energy-saving capability ensures that the vehicle's battery life is preserved, reducing unnecessary power consumption and enhancing the overall efficiency of the vehicle. Consequently, the vehicle remains ready for use with optimal battery levels whenever the user returns.

According to some embodiments, the method comprises: in response to determining that a distance between the user and the vehicle is below a third predetermined distance from the vehicle when the user carrying the wearable electronic device is approaching the vehicle, wherein the third predetermined distance is shorter than the second predetermined distance, unlocking the vehicle.

When the user is closer than the third predetermined distance from the vehicle the system can automatically unlock the vehicle or parts of the vehicle that are closest to the wearable device.

According to some embodiments, the method comprises in response to determining that the motion sensor of the wearable electronic device is in the active mode, allowing the predetermined movement pattern of the wearable device to control the vehicle function.

Controlling the vehicle can e.g. be opening the lock on the vehicle that is closest to the wearable device. If e.g. the wearable device is close to the trunk, the vehicle may open the trunk. The movement pattern or gesture of the wearable device may also control what is opened on the vehicle.

According to some embodiments, the method comprises storing the determined position of the vehicle as a last known position of the vehicle in the further electronic device.

According to some embodiments, the method comprises the step of determining the position of the vehicle by means of a first positioning unit integrated in the vehicle.

According to some embodiments, the method comprises the step of sending a signal comprising the determined position of the vehicle from the vehicle to the further electronic device for storage in the further electronic device.

This is beneficial as the vehicle often has much better antennas for positioning than small electronic devices and thereby can proved better positioning.

According to some embodiments, the method comprises: in response to determining that the distance is above a fourth predetermined distance from the vehicle when the user carrying the wearable electronic device is moving away from the vehicle: locking the vehicle.

An advantage is that the user does not have to think about locking the vehicle if walking away with the wearable device. In case the wearable device is worn by a delivery person, the delivery person will not have to actively lock the vehicle after e.g. leaving a package in the trunk.

According to some embodiments, the wearable electronic device is a smart watch or smart bracelet.

An advantage is that gestures are possible to use for controlling the vehicle when the device is equipped with sensors and worn on the wrist. Since the wearable electronic device enters sleep mode of at least the vehicle functions of the wearable device in response to determining that the wearable device has a current position that is above a first predetermined distance from the vehicle energy consuming vehicle functions as movement tracking can be used in the wearable electronic device for controlling the vehicle that would not be feasible without the sleep function.

According to some embodiments, the external electronic device is a smart phone. An advantage is that most users already have a smart phone, saving resources.

According to some embodiments the second predetermined distance d2 is longer than the first predetermined distance d1. According to some embodiments the third predetermined distance d3 is shorter than the first predetermined distance d1. According to some embodiments the first predetermined distance d1 is 3,5-4,5 m, preferably 4 m. According to some embodiments the second predetermined distance d1 is 4,5-10 m, preferably 5 m. According to some embodiments the third predetermined distance d1 is 1,5-3,5 m, preferably 3 m.

According to a second aspect there is provided a system comprising a vehicle comprising a first memory, a first radio communication module, a first positioning unit and a first processing circuitry operably connected to the first memory, to the first radio communication module and to the first positioning unit ; a wearable device comprising a second memory, a second radio communication module and a second processing circuitry operably connected to the second memory and to the second radio communication module; wherein the system is configured to execute the method according to the first aspect.

According to some embodiments, the system further comprises an external electronic device the system comprises a third memory, a third radio communication module, a third positioning unit and a third processing circuitry operably connected to the third memory, the third positioning unit and to the third radio communication module.

Effects and features of the second aspect are to a large extent analogous to those described above in connection with the first aspect. Embodiments mentioned in relation to the first aspect are largely compatible with the the second aspect.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a conceptual view of the system according to an embodiment of the present disclosure.
Figure 2 shows the different distances discussed in the embodiments of the present disclosure.
Figure 3 shows a vehicle included in the system of the present disclosure and possible controllable areas of the vehicle.

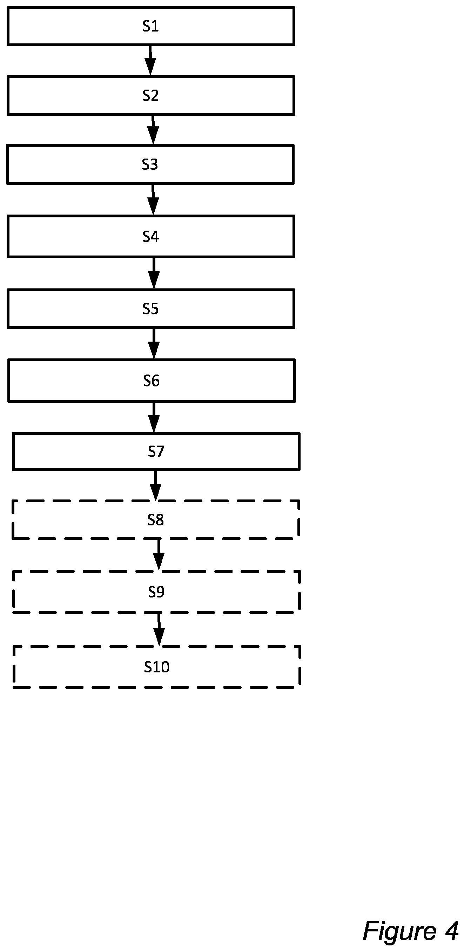

Figure 4 is a flow diagram illustrating the method according to the present disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

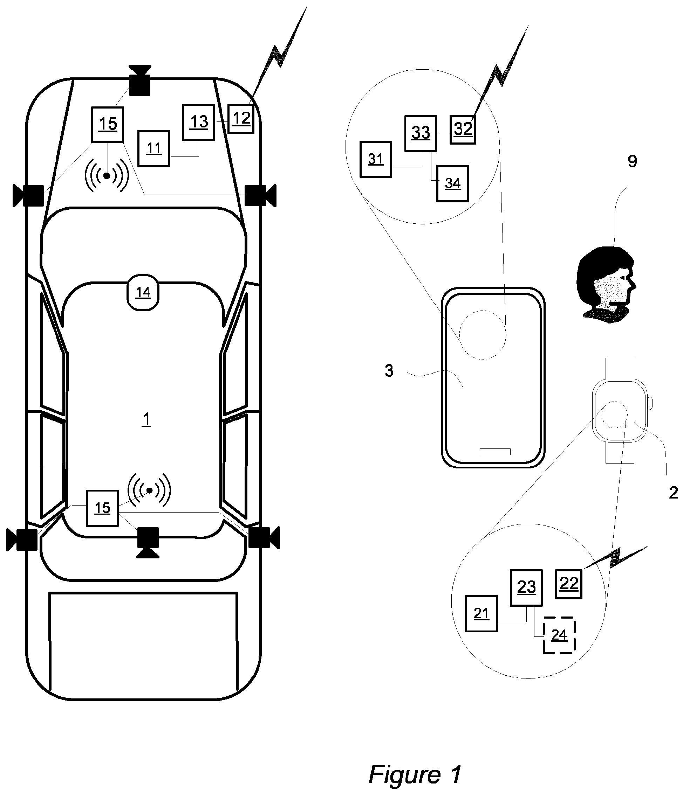

Figure 1 shows a conceptual view of a system according to an embodiment of the present disclosure. The system comprises a vehicle 1, a wearable electronic device 2 and an external electronic device 3.

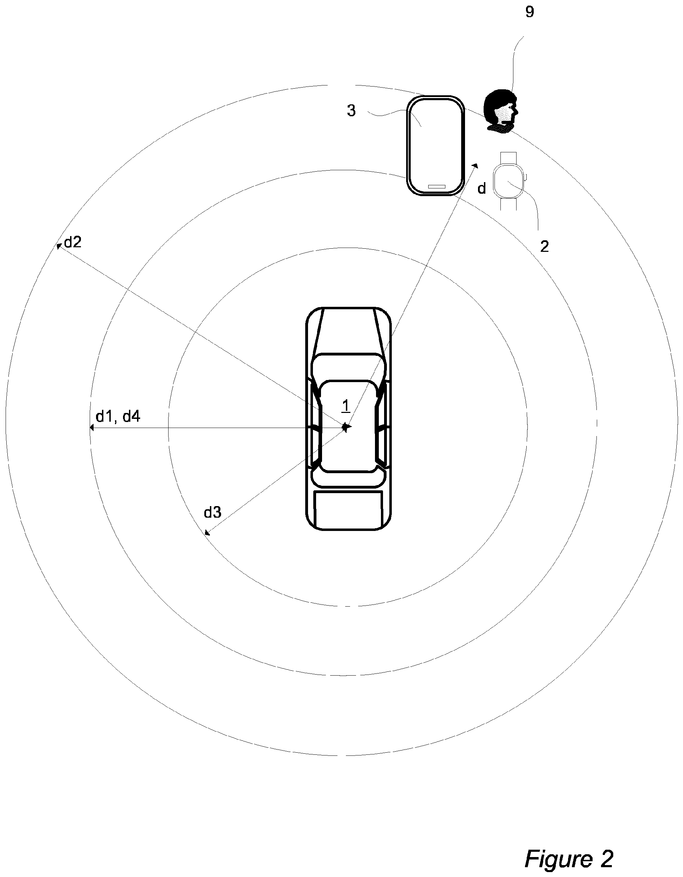

With reference to Figures 1 and 2 the first aspect of this disclosure shows a method for controlling the wearable electronic device 2 that is adapted for controlling a function of the vehicle 1.

The vehicle 1 comprises a first memory 11, a first radio communication module 12, a first positioning unit 14 and a first processing circuitry 13 operably connected to the first memory 11, to the first radio communication module 12 and to the first positioning unit 14.

The wearable electronic device 2 comprises a second memory 21, a second radio communication module 22 and a second processing circuitry 23 operably connected to the second memory 21 and to the second radio communication module 22. The wearable electronic device 2 further comprises a motion sensor 25 for detecting a movement pattern which is predetermined for controlling the vehicle function, wherein the motion sensor is adapted to be in an active mode or in a sleep mode.

The external electronic device 3 comprises a third memory 31, a third radio communication module 32, a third positioning unit 34 and a third processing circuitry 33 operably connected to the third memory 31, the third positioning unit 34 and to the third radio communication module 32.

The method comprises the steps of determining S1 a position of the vehicle 1 when the vehicle is stationary; storing S2 the determined position of the vehicle 1 as a last known position of the vehicle.

In response to determining that a user 9 carrying the wearable electronic device 2 is moving away from the vehicle: determining S3 a current position of the user by means of the wearable electronic device 2 or by means of the external electronic device 3 that is operatively connected to the wearable electronic device 2 and carried by the user, and determining a distance d between the determined current position of the user and the last known position of the vehicle. Further, in response to determining S4 that that the distance d is above a first predetermined distance d1: entering the sleep mode S5 of the motion sensor 25 of the wearable electronic device 2 if the motion sensor 25 of the wearable electronic device 2 is in the active mode.

On the other hand, in response to determining that the user 9 carrying the wearable electronic device 2 is approaching the vehicle 1, determining a current position of the user by means of the wearable electronic device 2 or by means of the external electronic device 3 that is operatively connected to the wearable electronic device 2 and carried by the user, and determining a distance d between the determined current position of the user and the last known position of the vehicle, and if the motion sensor of the wearable electronic device is in a sleep mode and the distance d is below a second predetermined distance d2: entering the active mode of the motion sensor S7 of the wearable electronic device 2 if the motion sensor 25 of the wearable electronic device 2 is in the sleep mode.

Thereby the energy will be saved when the vehicle functions of the wearable device 2 enter sleep mode while at a distance from the vehicle. This feature allows for the utilization of more energy-intensive vehicle functions when the device is in close proximity to the vehicle, which would otherwise be impractical.

Entering the active mode of the motion sensor S7 is initiated by a first wake-up signal sent from the external electronic device 3 to the wearable electronic device 2 in response to the determination that the distance d is below the second predetermined distance d2 when the user carrying the wearable electronic device is approaching the vehicle.

According to one embodiment, determining the current position of the user is performed by means of the second positioning unit 24 integrated in the wearable electronic device 2.

According to an alternative embodiment, determining the current position of the user is performed by means of the third positioning unit 34 integrated in the external electronic device 3.

According to one embodiment, the method comprises the step of determining a position of one of the wearable electronic device 2 and/or the external electronic device 3 by means of an electronic device positioning system 15 in the vehicle 1 when the user 9 carrying the wearable electronic device 2 is approaching the vehicle within a distance below the second predetermined distance d2 from the vehicle 1.

With reference to Figure 2, the method comprises in response to the determination that the distance is below the second predetermined distance d2: sending S8 a second wake-up signal to the vehicle 1 from either the wearable device 2 or the external electronic device 3 when the user carrying the wearable electronic device is approaching the vehicle. This allows the vehicle to enter sleep mode when the user is away from the vehicle. This functionality is beneficial regardless of the duration of the user's absence, whether it is for a short period or an extended time. By enabling the vehicle to enter sleep mode when not in use, the system effectively conserves battery power. This energy-saving capability ensures that the vehicle's battery life is preserved, reducing unnecessary power consumption and enhancing the overall efficiency of the vehicle. Consequently, the vehicle remains ready for use with optimal battery levels whenever the user returns.

According to the embodiment of Figures 1 and 2, the method comprises in response to determining that a distance d between the user and the vehicle is below a third predetermined distance d3 from the vehicle 1 when the user carrying the wearable electronic device is approaching the vehicle, wherein the third predetermined distance d3 is shorter than the second predetermined distance d2, unlocking the vehicle 1. When the user is closer than the third predetermined distance from the vehicle the system can automatically unlock the vehicle or parts of the vehicle that are closest to the wearable device.

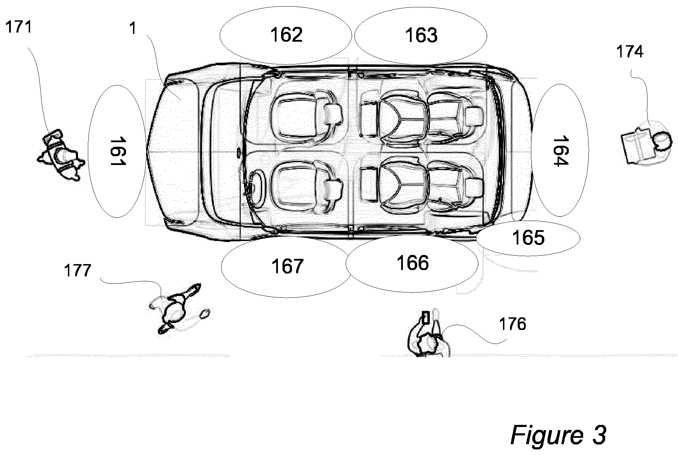

According to the embodiment of Figures 1, 2 and 3 the method comprises in response to determining S10 that the motion sensor 25 of the wearable electronic device 2 is in the active mode, allowing the predetermined movement pattern of the wearable device 2 to control the vehicle function. Controlling the vehicle can e.g. be opening the lock on the vehicle that is closest to the wearable device. If e.g. the wearable device is close to the trunk, the vehicle may open the trunk. The movement pattern or gesture of the wearable device may also control what is opened on the vehicle. In Figure 3 this is illustrated by the zones 161-167 to which the key-enabled device may have access to. The key-enabled device may have access to only one feature of one zone, e.g. open the trunk, open the door, open the hood, or open the charging or filling cap. A mechanic, illustrated as 171 in Figure 3, may e.g. have been given access only to open the hood 161 for service or repairs. A passenger 176 may be given access to zone 166 to open the passenger door and control the windows to the back door. A delivery person 174 can e.g. be given access to the trunk 164 for a package delivery. However, the wearable device can also have access to all zones. The driver 177 may e.g. be the vehicle owner and thereby have access to all zones 161-167 and all features and locks included in them.

With reference to Figures 1, 2 and 3 the method may comprise storing the determined position of the vehicle 1 as a last known position of the vehicle in the further electronic device 3. The step of determining the position of the vehicle may be performed by means of the first positioning unit 14 integrated in the vehicle. The method may further comprise the step of sending a signal comprising the determined position of the vehicle 1 from the vehicle to the further electronic device 3 for storage in the further electronic device. This is beneficial as the vehicle often has much better antennas for positioning than small electronic devices and thereby can proved better positioning.

According to the embodiment of Figures 1 and 2, the method comprises: in response to determining that the distance d is above a fourth predetermined distance from the vehicle 1 when the user 9 carrying the wearable electronic device is moving away from the vehicle: locking the vehicle. Thus, the user does not have to think about locking the vehicle if walking away with the wearable device. In case the wearable device is worn by a delivery person, the delivery person will not have to actively lock the vehicle after e.g. leaving a package in the trunk.

According to the embodiment of Figures 1 and 2, the method comprises: in response to determining that the wearable device 2 has a current position that is further away than a first predetermined distance d1 from the vehicle 1: entering vehicle sleep mode of the vehicle 1. The vehicle is then notified when it is suitable to go into sleep mode, thus maximizing the sleep time of the vehicle leading to reduced energy consumption an increased battery lifetime.

According to the embodiment of Figures 1 and 2, the wearable electronic device 2 is a smart watch or smart bracelet and the external electronic device 3 is a smart phone operably connected to the wearable electronic device 2.

With reference to Figure 2, the user carrying a wearable electronic device 2 is disclosed at a distance d from the vehicle 1. If the user 9 is walking away from the vehicle the method will just have entered sleep mode S5 of at least the motion sensor of the wearable device 2 after passing the first predetermined distance d1 from the vehicle 1. When the user returns, the method will wake up the motion sensor of the wearable device 2 and the vehicle 1. The vehicle may then take over positioning of the wearable device 2. When the wearable device 2 is closer to the vehicle than the third predetermined distance d3, the wearable device 2 unlocks the vehicle, the intended part of the vehicle, or the part/parts of the vehicle that the wearable device 2 has access to.

The person skilled in the art realizes that the present disclosure is not limited to the preferred embodiments described above. The person skilled in the art further realizes that modifications and variations are possible within the scope of the appended claims. For example, the wearable device could be other types of electronic devices than the ones mentioned as examples herein without deviating from the inventive concept defined by the claims. Additionally, variations to the disclosed embodiments can be understood and effected by the skilled person in practicing the claimed disclosure, from a study of the drawings, the disclosure, and the appended claims.

## Claims

1. A method for controlling a wearable electronic device (2) that is adapted
for controlling a function of a vehicle (1), wherein the wearable electronic device (2) comprises a motion sensor (25) for detecting a movement pattern which is predetermined for controlling the vehicle function, wherein the motion sensor is adapted to be in an active mode or in a sleep mode, the method comprising:
determining (S1) a position of the vehicle when the vehicle is stationary;
storing (S2) the determined position of the vehicle (1) as a last known position of the vehicle;
in response to determining that a user carrying the wearable electronic device is moving away from the vehicle:
determining (S3) a current position of the user by means of the wearable electronic device (2) or by means of an external electronic device (3) that is operatively connected to the wearable electronic device (2) and carried by the user, and determining a distance (d) between the determined current position of the user and the last known position of the vehicle;
in response to determining (S4) that that the distance (d) is above a first predetermined distance (d1):
entering the sleep mode (S5) of the motion sensor (25) of the wearable electronic device (2) if the motion sensor (25) of the wearable electronic device (2) is in the active mode; and/or
in response to determining that a user carrying the wearable electronic device is approaching the vehicle,
determining a current position of the user by means of the wearable electronic device (2) or by means of the external electronic device (3) that is operatively connected to the wearable electronic device (2) and carried by the user, and determining a distance (d) between the determined current position of the user and the last known position of the vehicle,
and if the motion sensor of the wearable electronic device is in a sleep mode and the distance (d) is below a second predetermined distance (d2):
entering the active mode of the motion sensor (S7) of the wearable electronic device (2) if the motion sensor (25) of the wearable electronic device (2) is in the sleep mode.

2. The method according to claim 1, comprising the step of determining the
current position of the user by means of a third positioning unit (34) integrated in the external electronic device.

3. The method according to claim 1 or 2, wherein entering the active mode of
the motion sensor (S7) is initiated by a first wake-up signal sent from the external electronic device (3) to the wearable electronic device (2) in response to the determination that the distance (d) is below the second predetermined distance (d2) when the user carrying the wearable electronic device is approaching the vehicle.

4. The method according to claim 1, comprising the step of determining the
current position of the user by means of a second positioning unit (24) integrated in the wearable electronic device.

5. The method according to any one of the preceding claims, comprising the
step of determining a position of one of the wearable electronic device (2) and the external electronic device (3) by means of an electronic device positioning system (15) in the vehicle when the user carrying the wearable electronic device (2) is approaching the vehicle within a distance below the second predetermined distance (d2) from the vehicle (1).

6. The method according to any one of the preceding claims, further comprising
in response to the determination that the distance is below the second predetermined distance (d2):
sending (S8) a second wake-up signal to the vehicle from either the wearable device (2) or the external electronic device (3) when the user carrying the wearable electronic device is approaching the vehicle.

7. The method according to any one of the preceding claims, further comprising:
in response to determining that a distance (d) between the user and the vehicle is below a third predetermined distance (d3) from the vehicle (1) when the user carrying the wearable electronic device is approaching the vehicle, wherein the third predetermined distance (d3) is shorter than the second predetermined distance (d2), unlocking the vehicle (1).

8. The method according to any one of the preceding claims, further comprising
in response to determining (S10) that the motion sensor (25) of the wearable electronic device (2) is in the active mode, allowing the predetermined movement pattern of the wearable device (2) to control the vehicle function.

9. The method according to any one of the preceding claims, further comprising
storing the determined position of the vehicle (1) as a last known position of the vehicle in the further electronic device (3).

10. The method according to any one of the preceding claims, further comprising
the step of determining the position of the vehicle by means of a first positioning unit (14) integrated in the vehicle.

11. The method according to claim 10, further comprising the step of
sending a signal comprising the determined position of the vehicle (1) from the vehicle to the further electronic device for storage in the further electronic device.

12. The method according to any one of the preceding claims, further comprising:
in response to determining that the distance (d) is above a fourth predetermined distance from the vehicle (1) when the user carrying the wearable electronic device is moving away from the vehicle: locking the vehicle.

13. The method according to any one off the preceding claims, wherein the wearable electronic device (25) is a smart watch or smart bracelet.

14. The method according to any one of the preceding claims, wherein the external electronic device (3) is a smart phone.

15. A system comprising
a vehicle (1) comprising a first memory (11), a first radio communication module (12), a first positioning unit (14) and a first processing circuitry (13) operably connected to the first memory (11), to the first radio communication module (12) and to the first positioning unit (14);
a wearable device (2) comprising a second memory (21), a second radio communication module (22) and a second processing circuitry (23) operably connected to the second memory (21) and to the second radio communication module (22);
wherein the system is configured to execute the method according to any one of claims 1-14.

16. The system according to claim 15, wherein the system further comprises an external electronic device (3) comprising a third memory (31), a third radio communication module (32), a third positioning unit (34) and a third processing circuitry (33) operably connected to the third memory (31), the third positioning unit (34) and to the third radio communication module (32).
